# EUROPÄISCHE PATENTSCHRIFT

(11) **EP 2 381 179 B1**
(45) Veröffentlichungstag und Bekanntmachung des Hinweises auf die Patenterteilung: **23.01.2013**
(21) Anmeldenummer: 11159425.5
(22) Anmeldetag: 23.03.2011
(51) Int. Cl.: F24D 3/14, A01G 9/14

(54) **Pflanzenanzuchttisch**
Plant raising table
Table de culture de plantes

(30) Priorität: 20.04.2010 DE 102010015635
(43) Veröffentlichungstag der Anmeldung: 26.10.2011
(73) Patentinhaber: Fermacell GmbH, 47119 Duisburg (DE)
(72) Erfinder: Lindner, Thilo, 09575, Eppendorf (DE); Dietsche, Joachim, 29525, Uelzen (DE)
(74) Vertreter: Solf, Alexander

(56) Entgegenhaltungen:
- EP-A1- 0 078 964
- EP-A2- 0 047 633
- JP-A- 2005 204 565
- US-H- H 239

## Beschreibung

Die Erfindung betrifft einen Pflanzenanzuchttisch mit Tischplattenelement.

Bei der Beheizung von Gewächshäusern in Gartenbaubetrieben wird grundsätzlich in Raum-, Boden- und Vegetationsheizung unterschieden. Obwohl die Verwendung einer Bodenheizung oder einer Vegetationsheizung, d.h. die Beheizung unter den Pflanzenwurzeln bzw. zwischen den Pflanzen, ein gesteigertes Pflanzenwachstum bewirkt, werden auf Grund ihrer Einfachheit noch immer überwiegend herkömmliche Warmwasser-Heizungsanlagen eingesetzt. Diese haben insbesondere zum Nachteil, dass sehr viel Heizenergie verschwendet wird und dass sich wegen der großen Rohrdurchmesser des Heizungssystems eine enorme Wassermenge in der Anlage befindet, welche im Bedarfsfall entsprechend schnell zu erwärmen ist. Darüber hinaus werden in der Regel Metallrohre verwendet, die materialbedingt korrodieren und so zu einer Verunreinigung des Heizungsmediums führen können.

Aus der Praxis sind bereits unterschiedliche Einrichtungen und Verfahren zur verbesserten Beheizung von Gewächshäusern bekannt, die unter anderem oben angeführte Probleme berücksichtigen. Bodenheizungs-Systeme sind insbesondere geeignet, da diese eine Absenkung der Raumtemperatur im Gewächshaus ermöglichen indem die Wärme genau dort zugeführt wird wo sie benötigt wird, nämlich direkt im Wurzelbereich. Dies erlaubt die Verwendung einer niedrigeren Wassertemperatur im Heizkreis. Die aufsteigende Wärme umschließt den Blattbereich und erwärmt erst anschließend den restlichen Luftraum. Es ist bekannt, dass auf diese Weise kürzere Kulturzeiten erreicht werden können. Ferner wird durch die Verwendung dünner Kunststoffschläuche die Warmwassermenge im System deutlich reduziert und eine längere Lebensdauer sowie ein geringerer Wartungsaufwand gegenüber der Verwendung von Metallrohren erreicht. Insgesamt ergibt sich eine deutliche Energieeinsparung.

DE 37 22 377 C2 beschreibt eine Heizung für einen Pflanzenanzuchttisch die mit Wasser im Niedertemperaturbereich bis 45 °C betrieben wird und im pflanzennahen Raum angeordnet ist, bestehend aus einem Tischgestell mit Winkelprofil, einer Trägerplatte z.B. aus Asbestzement, welche auf das Tischgestell aufgelegt wird und als verlorene Schalung verbleibt, mehreren nebeneinander auf der Trägerplatte angeordneten flexiblen Heizmatten und einer Estrichschicht, welche auf die Heizmatten aufgetragen wird und diese durchdringt bzw. überdeckt und als Standfläche für die Pflanzengefäße dient. Eine Heizmatte besteht hier aus einem groben Kettengewirke in das Kunststoffschläuche für den Transport des Wärmeträgers als Schussbindungselement in Maschenrichtung und darunter liegend geknautschte Folienstreifen zur Wärmedämmung als Querschüsse eingebunden sind. Die aufgetragene Estrichschicht muss mit Hilfe einer Rüttelvorrichtung verdichtet und geebnet werden und bildet daraufhin einen festen Verbund mit den Heizmatten. Bei Verwendung eines Tischrahmens mit einem zusätzlichen Winkelprofil und in bevorzugter Ausführung außerdem noch mit Hilfe von zusätzlichen zugtragenden Seilen, welche zwischen den Heizmatten angeordnet und an deren Enden verspannt sind, kann die Trägerplatte nach dem Aushärten des Estrichs auch entfernt werden.

Diese Anordnung erfordert eine aufwändige Montage, nämlich den Einsatz einer Rüttelvorrichtung und/oder gegebenenfalls die Verspannung zugtragender Seile. Da Schwindung nicht berücksichtigt ist, führt dies in der Regel zu Rissbildung in der Estrichschicht. Zudem wird keine optimale Wärmedämmung erzielt, weil die Heizenergieverteilung nicht homogen ist.

Die DE 34 12 891 A1 offenbart ein Pflanzenanzucht- und Wachstumssystem, bestehend aus einer Vielzahl von modularen Pflanzenanzucht- und Wachstumseinheiten von denen jede ein wannenförmiges Gehäuse mit Wabenstruktur, eine Flüssigkeitsableitungsplatte und Heizeinrichtungen aufweist. Zudem besteht dieses Pflanzenanzucht- und Wachstumssystem aus Einrichtungen zur Verbindung und einer Vorrichtung zur bewegbaren Halterung der Vielzahl von modularen Pflanzenanzucht- und Wachstumseinheiten. Jedes wannenförmige Gehäuse ist aus einem thermisch isolierenden Material, vorzugsweise geschäumten Kunststoff, derart geformt, dass es eine Vielzahl von nach oben geöffneten wabenförmigen, strukturellen Elementen zum Tragen von Pflanzenschalen aufweist sowie eine Flüssigkeitsleitungsverbindung bildet. Über diese strukturellen Elemente ist eine Flüssigkeitsableitungsplatte mit geneigten Flächen angeordnet, die eine vollständige Drainage ermöglichen und als Auflagefläche für Heizvorrichtungen dienen soll, auf welche unmittelbar die Pflanzen abgestellt werden. Gemäß einer bevorzugten Ausführungsform besteht eine Heizvorrichtung aus einem elektrischen Bandleiter, z.B. aus Aluminiumfolie, welcher durch ein tragendes, isolierendes, grobmaschiges Gitter hindurchgewebt ist. Mit Hilfe eines Zeltes kann zusätzlich für jede modulare Einheit ein eigenes Mikroklima erzeugt werden.

Dokument EP-A-0047633 offenbart ein Pflanzenanzuchttisch gemäß dem Oberbegriff des unhabhängigen Anspruchs 1.

Solche Pflanzenanzucht- und Wachstumseinheiten verwenden eine wärmeisolierende Unterlage, jedoch weisen sie einen komplizierten Aufbau auf und sind speziell für die Verwendung zusammen mit entsprechenden Vorrichtungen verschiebbar konzipiert, nicht aber für herkömmliche freitragende Gestelle. Das Gehäuse selbst besitzt ebenfalls eine aufwändig gestaltete Form, was sich in den Herstellungskosten niederschlägt. Zudem bietet dieses System keine homogene Wärmeverteilung unter den Pflanzenschalen, weil diese ohne entsprechende Ausgleichsschicht unmittelbar auf die Heizvorrichtungen abgestellt werden.

Der Erfindung liegt die Aufgabe zugrunde, einen Pflanzenanzuchttisch mit Tischplattenelement bereitzustellen, bei dem das Tischplattenelement aus einfachen Elementen aufgebaut ist und ein geringes Gesamtgewicht aufweist, besonders einfach, schnell und kostengünstig montierbar ist, ein den Pflanzenwuchs begünstigendes Mikroklima schafft und energiesparend ist.

Die Lösung dieser Aufgabe erfolgt gemäß der Erfindung durch die Merkmale von Anspruch 1.

Ein Anzuchttisch weist erfindungsgemäß einen vorzugsweise auf Rollen zweckmäßigerweise querverfahrbaren Tischunterbau und darauf angeordnet mindestens ein Tischplattenelement auf, wobei das Tischplattenelement wenigstens eine wärmeisolierende vorzugsweise mineralisiche Trägerplatte mit darauf angeordneter oder in ihren Oberflächenbereich integrierter flächiger Heizeinrichtung aufweist. Ein Kern der Erfindung besteht darin, dass die wärmeisolierende Trägerplatte aus einer zementgebundenen monolithischen Leichtbauplatte mit Armierung aufgebaut ist. Auf die Heizeinrichtung ist insbesondere eine Ausgleichsschicht vorzugsweise bestehend aus einer zementgebundenen Ausgleichsmasse aufgetragen.

Die Leichtbauplatte wirkt dabei sowohl als tragender und biegesteifer Träger für die weiteren Komponenten des Tischplattenelements und die Auflasten in Form von z.B. Pflanzentöpfen als auch als Wärmedämmung und zur homogenen Wärmespeicherung und Wärmeverteilung, um die von der Heizeinrichtung erzeugte Wärme optimal im wesentlichen nach oben zu den Pflanzenwurzeln zu leiten. Auf diese Weise wird die Heizleistung optimal genutzt. Die Ausgleichsschicht bewirkt ebenfalls eine homogene Wärmeverteilung und stellt eine ebene Standfläche für Pflanzentöpfe zur Verfügung.

Vorteilhafte Ausgestaltungen und Weiterbildungen der Erfindung ergeben sich aus den Unteransprüchen sowie aus der folgenden Beschreibung im Zusammenhang mit der Zeichnung.

Im Folgenden wird die Erfindung anhand der Zeichnung beispielhaft näher erläutert. Es zeigen:
- Fig. 1:: Schematisch eine Seitenansicht eines erfindungsgemäßen Anzuchttisches in Schnittdarstellung mit einem Tischplattenelement gemäß einer ersten Ausführungsform der Erfindung;

- Fig.2:: Schematisch eine Seitenansicht eines Tischplattenelements in Schnittdarstellung gemäß einer zweiten Ausführungsform der Erfindung;
- Fig. 3:: Eine perspektivische Draufsicht auf einen Teilbereich einer erfin-dungsgemäß verwendeten Leichtbauplatte mit einer Heizeinrichtung;
- Fig. 4:: Schematisch eine Draufsicht auf einen Teilbereich einer erfindungs-gemäß verwendeten Heizeinrichtung in Form einer Noppenmatte mit darauf verlegtem Heizrohr.

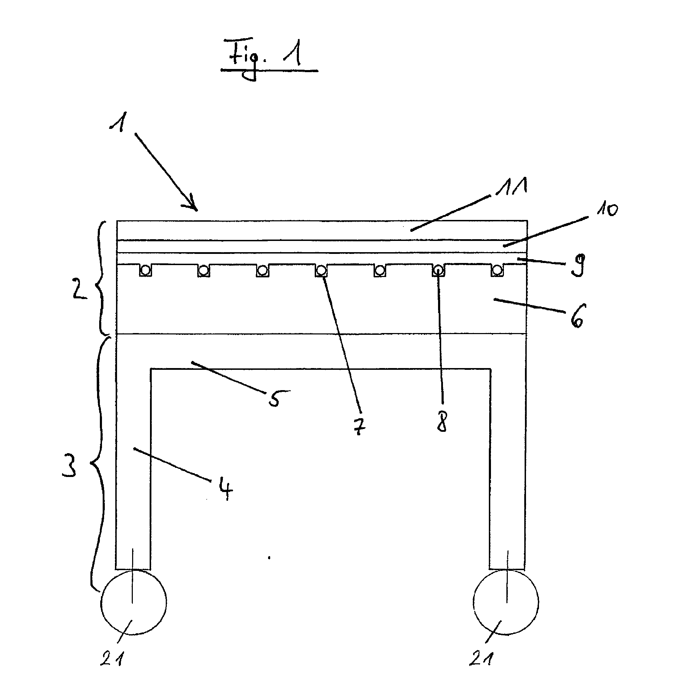

Nach der Erfindung weist der Anzuchttisch 1 gemäß Fig. 1 einen Tischunterbau 3, z.B. ein skelettartiges Anzuchttischgestell mit vertikalen Tischbeinen 4 auf, die einen horizontalen verstrebten Tischrahmen 5 tragen, vorzugsweise zuunterst Rollen 21 zweckmäßigerweise zum Querverfahren aufweisen. Auf dem Tischrahmen 5 lagert ein Tischplattenelement 2, das zu unterst mindestens eine z.B. mineralische Leichtbauplatte 6, vorzugsweise mehrere nebeneinander auf Stoss und aneinander gereihte zementgebundene monolithische Leichtbauplatten 6 aufweist. Eine erfindungsgemäß verwendete Leichtbauplatte 6 weist zweckmäßigerweise eine Leichtzuschlagstoffe enthaltende Kernschicht auf, auf der eine obere und vorzugsweise auch untere zementgebundene, vorzugsweise ein Bewehrungsmittel, z.B. in Form von Bewehrungsfasern oder Bewehrungsgewebe, und zweckmäßigerweise ebenfalls einen Leichtzuschlagstoff aufweisende Deckschicht angeordnet ist. Derartige Leichtbauplatten 6 werden beispielsweise in der DE 10 2005 004 148 A1, US 2002/0170648 A1, DE 198 04 325 A1 und US 3,284,980 A beschrieben.

Die Leichtbauplatten 6 haben vorzugsweise die folgenden Abmessungen:
Länge: 50 bis 600, insbesondere 100 bis 200 cm
Breite: 50 bis 600, insbesondere 100 bis 200 cm
Dicke: 0,5 bis 8, insbesondere 0,5 bis 3 cm.

Die Druckfestigkeit der Leichtbauplatten 6 liegt z.B. zwischen 4 und 12 N/mm², insbesondere zwischen 5 und 8 N/mm² und die Biegefestigkeit z.B. zwischen 4 und 10, insbesondere zwischen 5 und 7 N/mm².

Die Leichtbauplatten 6 sind zweckmäßigerweise an ihren Stosskanten miteinander verbunden, z.B. miteinander verklebt oder weisen z.B. eine Nut-Feder-Verbindung auf.

Die Leichtbauplatte 6 ist oberflächig und/oder im Oberflächenbereich - gemeint ist die dem Tischgestell 3 abgewandte Oberfläche - mit einer Heizeinrichtung, insbesondere einer flächigen Heizeinrichtung, kombiniert.

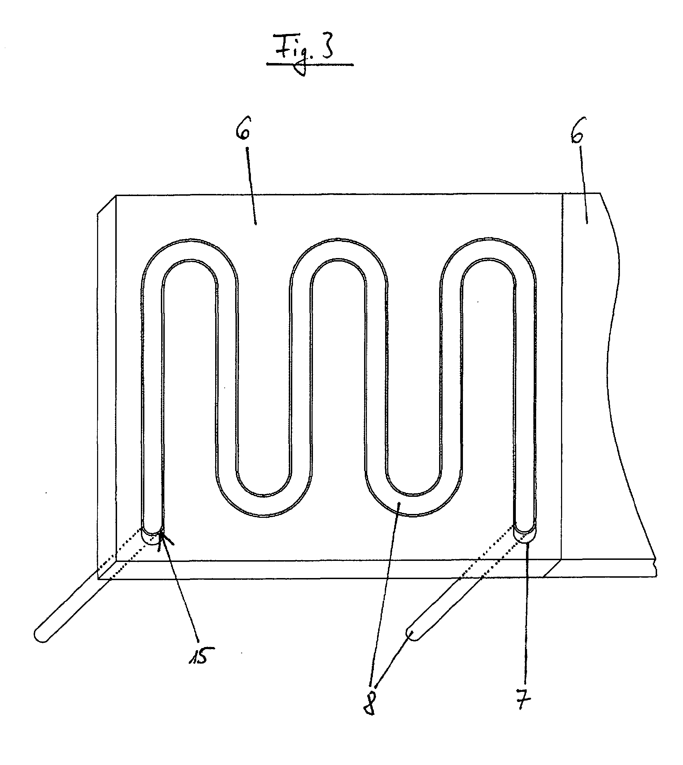

Gemäß Fig. 1 und Fig. 3 sind nach einer Ausführungsform der erfindungsgemäßen Kombination in dem Oberflächenbereich der Leichtbauplatte 6 auf Abstand nebeneinander Nuten 7 eingebracht mit z.B. einer Tiefe zwischen 4 und 20 mm und einer Breite zwischen 4 und 20 mm. Die Nuten 7 können bei Verwendung mehrerer nebeneinander angeordneter Leichtbauplatten 6 plattenübergreifend in dem Tischplattenelement 2 und dabei z.B. von Leichtbauplatte 6 zu Leichtbauplatte 6 fluchtend angeordnet sein. Sie verlaufen zweckmäßigerweise parallel zueinander im Abstand zwischen 6 und 20 cm.

In den Nuten 7 lagern, wie in Fig. 3 dargestellt, vorzugsweise ein Heizmedium führende Rohre, z.B. Heizungsrohre oder Heizungsschläuche 8, z.B. mäanderförmig verlegt, die mindestens eine Einlass- und mindestens eine Auslassöffnung 15 für ein extern zugeführtes Heizmedium, z.B. in Form von Warmwasser, Warmdampf oder Warmluft haben. Die Heizungsrohre oder Heizungsschläuche 8 weisen z.B. einen Innendurchmesser zwischen 6 und 15 mm und einen Außendurchmesser zwischen 8 und 18 mm auf und überragen vorzugsweise die Nuten 7 nach außen nicht. Sie bestehen zweckmäßigerweise aus Kunststoff oder Metall, vorzugsweise aber aus Kunststoff.

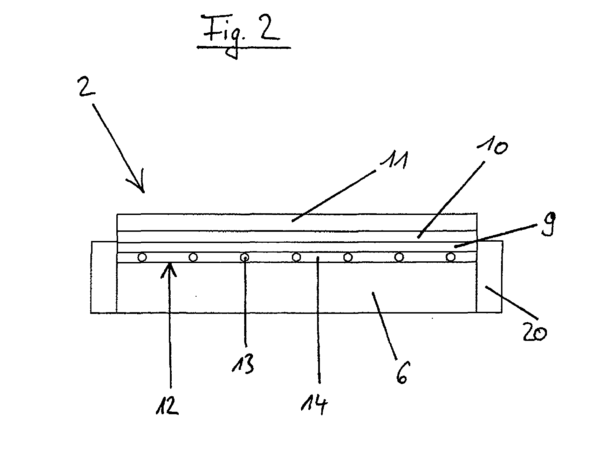

Auf den Leichtbauplatten 6 ist eine z.B. 3 bis 40 mm dicke estrichartige, vorzugsweise ebenfalls zementgebundene Ausgleichsschicht 9, gegebenenfalls auch plattenübergreifend angeordnet, die eine ebene Oberfläche hat und die Nuten 7 mit den Heizungsrohren oder Heizungsschläuchen 8 zumindest abdeckt, vorzugsweise aber auch die Freiräume neben den Heizungsrohren oder Heizungsschläuchen 8 in den Nuten 7 ausfüllt und mit der Oberfläche der Leichtbauplatte 6 in fester Verbindung steht (Fig. 1; Fig. 2).

Eine weitere Ausführungsform der erfindungsgemäßen Kombination sieht nach Fig. 2 vor, zumindest eine, zweckmäßigerweise mehrere relativ dünne, nebeneinander angeordnete Heizmatten 12, gegebenenfalls plattenübergreifend auf der Oberfläche der Leichtbauplatten 6 anzuordnen. Die Heizmatten 12 sind vorzugsweise auf der Oberfläche der Platten 6 befestigt, z.B. aufgeklebt. Sie bestehen z.B. aus einem textilen Flächengebilde 14, in das Heizelemente 13 eingebracht und gehaltert sind. Die Heizelemente 13 können elektrische Heizelemente, z.B. Heizdrähte, oder von einem Heizmedium durchfließbare Rohre oder Schläuche 8, z.B. aus Kunststoff oder Metall, vorzugsweise aus Kunststoff, sein. Solche Heizmatten 12 sind bekannt (z.B. DE 37 22 377 C2, DE 10 2006 028 396 A1, DD 237 369 A1 und DE 78 23 943 U1).

Die Heizmatten haben vorzugsweise die folgenden Abmessungen:
Länge: 50 bis 600, insbesondere 100 bis 200 cm
Breite: 50 bis 600, insbesondere 100 bis 200 cm
Dicke: 0,5 bis 4, insbesondere 0,8 bis 1,5 cm.

Zweckmäßigerweise ist auf den Heizmatten 12 ebenfalls eine oben beschriebene Ausgleichsschicht 9 vorgesehen, die mit den Heizmatten 12 in fester Verbindung steht. Die Ausgleichsschicht 9 kann auch das Heizmattenmaterial durchdringen und mit der Oberfläche einer Leichtbauplatte 6 in Verbindung stehen, so dass die Heizmatte durch die Durchdringung unverrückbar verankert ist.

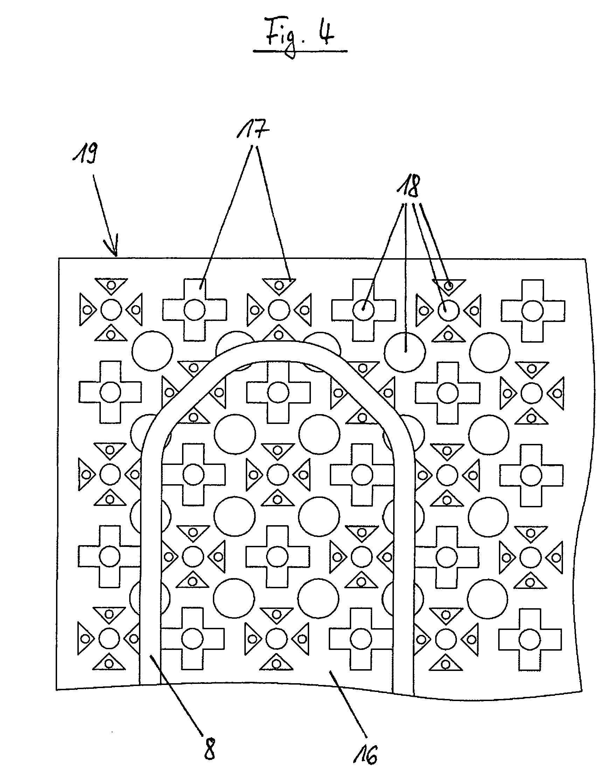

Eine vorteilhafte Ausführungsform der erfindungsgemäßen Kombination sieht gemäß Fig. 4 vor, dass die Heizmatte 12 aus einem Rohrverlegeelement 19 für Heizmedien führende Rohre mit entsprechenden Heizrohren 8 besteht. Das Rohrverlegeelement 19 kann z.B. eine an sich bekannte flexible Kunststoffmatte 16 mit einer Vielzahl von hinterschnittenen, z.B. tiefgezogenen Rohrhaltenoppen 17 für die Aufnahme und Verlegung von Heizrohren 8 sein. Die Kunststoffmatte 16 weist zweckmäßigerweise Löcher 18 auf, um ein Durchdringen der Matte 16 mit Ausgleichsschichtmaterial 9 zu ermöglichen. Die Heizrohre 8 können z.B. aus Kunststoff bestehen. Ein derartiges Rohrverlegeelement 19 ist z.B. in der DE 103 13 076 B3 beschrieben. Es können aber auch ähnliche Rohrverlegeelemente 19, wie z.B. in der DE 203 09 683 U1 und DE 199 36 801 C1 beschrieben, verwendet werden. Die Rohrverlegeelemente 19 haben vorzugsweise die folgenden Abmessungen:
Länge: 50 bis 600, insbesondere 100 bis 200 cm
Breite: 50 bis 600, insbesondere 100 bis 200 cm
Dicke: 0,5 bis 4, insbesondere 0,8 bis 1,6 cm.

Hinsichtlich einer verbesserten Wärmeisolierung ist es zudem vorteilhaft, an den nach außen weisenden Seitenflächen bzw. Seitenkanten des Anzuchttisch 1 zu oberst desTischplattenelements 2 jeweils einen Kantensteg 20 (Fig. 2) insbesondere aus wärmedämmenden Material zu befestigen, wobei ein Kantensteg 20 eine Seitenfläche z.B. vollständig überdeckt und die Unterseite des Kantenstegs 20 zweckmäßigerweise bündig mit der Unterseite der Leichtbauplatte 6 und die Oberseite des Kantenstegs 20 in etwa bündig mit der Oberfläche der Ausgleichsschicht 9 angeordnet ist. Vorzugsweise besteht der Kantensteg 20 aus demselben Material wie die erfindungsgemäß als unterste Komponente eines Tischplattenelements 2 verwendete Leichtbauplatte 6, wobei zur Bildung eines Kantenstegs 20 ein solcher Leichtbauplattensteg hochkant angeordnet und in der erforderlichen Höhe aus einer Leichtbauplatte 6 geschnitten ist.

Nach der Erfindung befindet sich zweckmäßigerweise auf der Oberfläche der Ausgleichsschicht 9 eine wasserdichte Abdeckschicht 10 (Fig. 1; Fig. 2), z.B. in Form einer Kunststofffolie oder einer Kunststoffbeschichtung. Die Folie kann z.B. eine PVC-Schwimmbadfolie oder eine PVC-gewebeverstärkte Folie sein. Die Kunststoffbeschichtung besteht z.B. aus Epoxidharz oder Polyesterharz oder Flüssigfolie.

Die Dicke der Abdeckschicht 10 liegt zwischen 1 und 20 mm, insbesondere zwischen 1 und 5 mm.

Für die Erzeugung eines den Pflanzenwuchs besonders begünstigenden Mikroklimas kann auf der wasserdichten Abdeckschicht 10 eine Drainschicht 11 1 (Fig. 1; Fig. 2), vorzugsweise ein Drainagevlies z.B. bestehend aus PP-Spinnfasern, angeordnet sein.

Das erfindungsgemäße schichtförmige Tischplattenelement 2, das auf dem Anzuchttischgestell 3 lagert, weist zweckmäßigerweise ein geringes Flächengewicht zwischen 10 und 40 kg/m² auf.

Bei dem erfindungsgemäßen Anzuchttisch 1 ist von Vorteil, dass ein einfach aufgebautes und kostengünstiges System vorliegt, welches vor Ort schnell und sehr einfach montierbar sowie rasch einsatzbereit ist. Dies wird durch die Verwendung von handelsüblichen und auf dem Markt erhältlichen Komponenten und gegebenenfalls durch werkseitig vorgefertigte Tischplattenelemente 2 weiter begünstigt. Aufgrund des niedrigen Gewichtes des Tischplattenelements 2 können übliche, eventuell bereits vorhandene, Gestelle oder sonstige Unterkonstruktionen verwendet werden.

Erfindungsgemäß ist die Verwendung der beschriebenen Leichtbauplatte mit Armierung 6 als hauptsächlicher Lastträger des Tischplattenelements 2. Diese Trockenbau-Bauplatte vereint hohe Festigkeit, hohe Widerstandsfähigkeit gegen Eindringen von Feuchtigkeit und eine sehr gute Wärmedämmung. Die Kombination der Leichtbauplatte 6 mit der darüber liegenden Heizeinrichtung und der darüber angeordneten zementgebundenen Ausgleichsschicht 9 bewirkt sowohl eine besonders energieeffiziente Beheizung von auf der Ausgleichsschicht 9 abgestellten Pflanzentöpfen, als auch eine sehr gute Wärmespeicherung und homogene Wärmeverteilung insbesondere auf der Oberfläche der Ausgleichsschicht 9. Zudem ist die Leichtbauplatte 6 allgemein sehr gut zu Bearbeiten, was im Hinblick auf die Herstellung von Rohrführungskanälen und Rohrzugängen 15 bzw. -abgängen 15 vorteilhaft ist.

Die leichte Konstruktion der erfindungsgemäßen Anzuchttische bietet darüber hinaus den Vorteil, dass die Tische verschiebbar als Rolltische ausgeführt werden können. Rolltische sind platzsparend und deshalb im modernen Gewächshaus weit verbreitet. Die Zuführung des Heizmediums erfolgt in diesem Fall flexibel, z.B. über PE-Schlauchverbindungen.

Insbesondere der pflanzenwuchsbegünstigende Effekt wird durch die Schaffung eines verbesserten Mikroklimas mittels einer Drainage-Einrichtung 11, in Kombination mit dem wärmespeichernden Aufbau des Tischplattenelements 2, weiter gesteigert, so dass ein gesünderes, schnelleres Pflanzenwachstum erreicht wird. Art- und Sortenabhängig ist sogar eine Verkürzung der Kulturzeit von 8 bis 14 Tagen möglich. Die Energieeinsparung gegenüber herkömmlichen Warmwasser-Heizungssystemen kann z.B. 25 bis 30% betragen. Zudem ist der Anzuchttisch 1 aufgrund des erfindungsgemäßen Aufbaus, extrem langlebig und nahezu wartungsfrei.

Es liegt im Rahmen der Erfindung, an Stelle einer ein externes Heizsystem zur Erwärmung des Heizmediums z.B. in Form von Wasser oder Öl oder Luft erfordernden Heizungseinrichtung ein elektrisches Heizsystem zu verwenden. Dies ist insbesondere dann sinnvoll, wenn Anzuchttische für Kleingewächshäuser z.B. von Hobbygärtnern gefertigt werden sollen. Derartige Gewächshäuser besitzen in der Regel keine Heizungen. Beispielsweise können in den Nuten 7 elektrische Heizdrähte an Stelle der Rohre 8 oder in Kombination mit den Rohren 8 angeordnet sein (nicht dargestellt), die entsprechende elektrische Anschlüsse aufweisen.

## Patentansprüche

1. Anzuchttisch mit einem Tischunterbau (3) und einem Tischplattenelement (2), das zuunterst mindestens eine Leichtbauplatte aufweist, die tischgestellabgewandtseitig oberflächlich und/oder in ihrem Oberflächenbereich mit einer, insbesondere flächigen, Heizeinrichtung kombiniert ist,
**dadurch gekennzeichnet, dass**
die Leichtbauplatte eine mineralische zementgebundene monolithische Leichtbauplatte (6) mit Armierung ist.

2. Anzuchttisch nach Anspruch 1,
**dadurch gekennzeichnet, dass**
die Leichtbauplatte (6) eine Leichtzuschlagstoff enthaltende Kernschicht aufweist, auf der zumindest auf der einen Oberflächenseite eine zementgebundene, vorzugsweise ebenfalls Leichtzuschlagstoff enthaltende, Deckschicht angeordnet ist.

3. Anzuchttisch nach Anspruch 2,
**dadurch gekennzeichnet, dass**
die Deckschicht Bewehrungsmittel, z.B. in Form einer textilen Bewehrungsmatte, aufweist.

4. Anzuchttisch nach einem der Ansprüche 1 bis 3,
**dadurch gekennzeichnet, dass**
die Leichtbauplatte (6) die folgenden Abmessungen
Länge: 50 bis 600, insbesondere 100 bis 200 cm
Breite: 50 bis 600, insbesondere 100 bis 200 cm
Dicke: 0,5 bis 8,0, insbesondere 0,5 bis 3,0 cm
und zweckmäßigerweise Druckfestigkeiten zwischen 4 und 12 N/mm², insbesondere zwischen 5 und 8 N/mm² und Biegefestigkeiten zwischen 4 und 10 N/mm², insbesondere zwischen 5 und 7 N/mm² aufweist.

5. Anzuchttisch nach einem der Ansprüche 1 bis 4,
**dadurch gekennzeichnet, dass**
mehrere Leichtbauplatten (6) nebeneinander angeordnet und zweckmä-βigerweise miteinander verbunden sind.

6. Anzuchttisch nach einem der Ansprüche 1 bis 5,
**dadurch gekennzeichnet, dass**
die Heizeinrichtung in die Oberfläche der Leichtbauplatte (6) eingebrachte Nuten (7) und darin gelagerte Heizungsdrähte und/oder ein Heizungsmedium führende Rohre, z. B. Heizungsrohre oder Heizungsschläuche (8) aufweist, wobei die Drähte und/oder Rohre (8) mit Anschlüssen für die Zuführung von elektrischer Energie bzw. für ein Heizmedium versehen sind.

7. Anzuchttisch nach einem der Ansprüche 1 bis 5,
**dadurch gekennzeichnet, dass**
als Heizeinrichtung auf der Leichtbauplatte (6) mindestens eine, Heizelemente (13) z. B. in Form von elektrischen Heizdrähten oder ein Heizmedium führenden Rohren (8) aufweisende Heizmatte (12) angeordnet ist.

8. Anzuchttisch nach Anspruch 7,
**dadurch gekennzeichnet, dass**
die Heizmatten (12) folgende Abmessungen aufweisen:
Länge: 50 bis 600, insbesondere 100 bis 200 cm
Breite: 50 bis 600, insbesondere 100 bis 200 cm
Dicke: 0,5 bis 4,0, insbesondere 0,5 bis 2,0 cm.

9. Anzuchttisch nach Anspruch 7 und/oder 8,
**dadurch gekennzeichnet, dass**
die Heizmatte (12) ein Verlegenoppen aufweisendes mattenartiges Rohrverlegeelement (19) mit darauf verlegten Heizungsrohren oder Heizungsschläuchen (8) oder Heizdrähten aufweist.

10. Anzuchttisch nach einem der Ansprüche 1 bis 9,
**dadurch gekennzeichnet, dass**
auf der Heizeinrichtung eine z. B. 2 bis 40 mm dicke estrichartige, vorzugsweise zementgebundene, Ausgleichsschicht (9) angeordnet ist.

11. Anzuchttisch nach Anspruch 10,
**dadurch gekennzeichnet, dass**
an nach außen weisenden Seitenflächen des Anzuchttisches (1) zuoberst des Tischplattenelements (2) jeweils ein insbesondere aus einem wärmedämmenden Material bestehender Kantensteg (20) befestigt ist, wobei ein Kantensteg (20) eine Seitenfläche vollständig überdeckt und wobei die Unterseite des Kantenstegs (20) zweckmäßigerweise bündig mit der Unterseite der Leichtbauplatte (6) und die Oberseite des Kantenstegs (20) in etwa bündig mit der Oberfläche der Ausgleichsschicht (9) angeordnet ist.

12. Anzuchttisch nach einem der Ansprüche 10 bis 11,
**dadurch gekennzeichnet, dass**
auf der Oberfläche der Ausgleichsschicht (9) eine wasserdichte, z. B. 0,1 bis 8 mm dicke Abdeckschicht (10), z. B. in Form einer Folie und/oder aus einem Kunststoff, angeordnet ist.

13. Anzuchttisch nach einem der Ansprüche 10 bis 12,
**dadurch gekennzeichnet, dass**
auf der Ausgleichsschicht (9) oder auf der Abdeckschicht (10) eine z. B. 0,1 bis 20 mm dicke Drainschicht (11) z. B. aus einem Drainagevlies angeordnet ist.

14. Anzuchttisch nach einem der Ansprüche 1 bis 13,
**dadurch gekennzeichnet, dass**
die Anzuchttische als Rolltische ausgeführt sind, wobei die Tischbeine die Rollen (21) aufweisen.

## Claims

1. Cultivation table with a table substructure (3) and
a tabletop element (2), which element has, at the very bottom, at least one lightweight building board which, on the side facing away from the table underframe, is combined at the surface and/or in its surface region with a heating device, in particular a planar heating device,
**characterised in that**
the lightweight building board is a mineral, cement-bonded, monolithic lightweight building board (6) with reinforcement.

2. Cultivation table according to Claim 1,
**characterised in that**
the lightweight building board (6) has a core layer which contains lightweight aggregate and on which, at least on one surface side, a cement-bonded, preferably likewise lightweight aggregate-containing, cover layer is arranged.

3. Cultivation table according to Claim 2,
**characterised in that**
the cover layer has reinforcing means, for example in the form of a textile reinforcing mat.

4. Cultivation table according to one of Claims 1 to 3,
**characterised in that**
the lightweight building board (6) has the following dimensions
length: 50 to 600 cm, in particular 100 to 200 cm
width: 50 to 600 cm, in particular 100 to 200 cm
thickness: 0.5 to 8.0 cm, in particular 0.5 to 3.0 cm and expediently compressive strengths of between 4 and 12 N/mm², in particular of between 5 and 8 N/mm², and bending strengths of between 4 and 10 N/mm², in particular of between 5 and 7 N/mm².

5. Cultivation table according to one of Claims 1 to 4,
**characterised in that**
a plurality of lightweight building boards (6) are arranged side by side and expediently connected to one another.

6. Cultivation table according to one of Claims 1 to 5,
**characterised in that**
the heating device has grooves (7) made in the surface of the lightweight building board (6) and, mounted in the grooves, heating wires and/or pipes, for example heating pipes or heating tubes (8), conveying a heating medium, the wires and/or pipes (8) being provided with connections for supplying electrical energy or for a heating medium.

7. Cultivation table according to one of Claims 1 to 5,
**characterised in that**
at least one heating mat (12), having heating elements (13), for example in the form of electrical heating wires or pipes (8) conveying a heating medium, is arranged as the heating device on the lightweight building board (6).

8. Cultivation table according to Claim 7, **characterised in that**
the heating mats (12) have the following dimensions:
length: 50 to 600 cm, in particular 100 to 200 cm
width: 50 to 600 cm, in particular 100 to 200 cm
thickness: 0.5 to 4.0 cm, in particular 0.5 to 2.0 cm.

9. Cultivation table according to Claim 7 and/or 8,
**characterised in that**
the heating mat (12) has a mat-like pipe-laying element (19) which has laying pimples and on which are laid heating pipes or heating tubes (8) or heating wires.

10. Cultivation table according to one of Claims 1 to 9,
**characterised in that**
a screed-like, preferably cement-bonded, levelling layer (9), for example of 2 to 40 mm thickness, is arranged on the heating device.

11. Cultivation table according to Claim 10,
**characterised in that**
a respective edge web (20), in particular composed of a heat-insulating material, is fastened to each of the outward-facing lateral surfaces of the cultivation table (1) at the very top of the tabletop element (2), one edge web (20) completely covering a lateral surface, and the underside of the edge web (20) being arranged expediently flush with the underside of the lightweight building board (6), and the upper side of the edge web (20) being arranged approximately flush with the upper surface of the levelling layer (9).

12. Cultivation table according to one of Claims 10 to 11,
**characterised in that**
a water-tight covering layer (10), for example of 0.1 to 8 mm thickness and for example in the form of a sheet and/or made of a synthetic material, is arranged on the upper surface of the levelling layer (9).

13. Cultivation table according to one of Claims 10 to 12,
**characterised in that**
a drainage layer (11), for example of 0.1 to 20 mm thickness and for example made of a drainage nonwoven fabric, is arranged on the levelling layer (9) or on the covering layer (10).

14. Cultivation table according to one of Claims 1 to 13,
**characterised in that**
the cultivation tables are formed as rolling tables, the table legs having the rollers (21).

## Revendications

1. Table de culture avec une sous-structure de table (3) et un élément de plaque de table (2) qui présente tout en bas au moins une plaque légère qui est combinée du côté éloigné à l'empiétement de table sur la surface et/ou dans sa zone de surface à un dispositif de chauffage en particulier plan,
**caractérisée en ce que**
la plaque légère est une plaque légère (6) monolithique, minérale, liée au ciment.

2. Table de culture selon la revendication 1,
**caractérisée en ce que**
la plaque légère (6) présente une couche de noyau contenant un agrégat léger, sur laquelle est disposée au moins une couche de recouvrement liée au ciment, contenant de préférence aussi de l'agrégat léger.

3. Table de culture selon la revendication 2,
**caractérisée en ce que**
la couche de recouvrement présente des moyens d'armature par exemple sous la forme d'un treillis d'armature textile.

4. Table de culture selon l'une quelconque des revendications 1 à 3,
**caractérisée en ce que** la plaque légère (6) présente les dimensions suivantes :
longueur : 50 à 600, en particulier 100 à 200 cm
largeur : 50 à 600, en particulier 100 à 200 cm
épaisseur : 0,5 à 8,0 en particulier 0,5 à 3 cm
et de manière appropriée des résistances à la pression comprises entre 4 et 12 N/mm², en particulier entre 5 et 8 N/mm² et des résistances à la flexion comprises entre 4 et 10 N/mm², en particulier entre 5 et 7 N/mm².

5. Table de culture selon l'une quelconque des revendications 1 à 4,
**caractérisée en ce que**
plusieurs plaques légères (6) sont disposées les unes à côté des autres et sont reliées entre elles de manière appropriée.

6. Table de culture selon l'une quelconque des revendications 1 à 5,
**caractérisée en ce que**
le dispositif de chauffage présente des rainures (7) réalisées dans la surface de la plaque légère (6) et des fils de chauffage logés dedans et/ou des tubes guidant un fluide de chauffage, par exemple des tubes de chauffage ou des tuyaux de chauffage (8), les fils et/ou tubes (8) étant pourvus de raccords pour l'amenée d'énergie électrique ou pour un fluide de chauffage.

7. Table de culture selon l'une quelconque des revendications 1 à 5,
**caractérisée en ce qu'**au moins un treillis de chauffage (12) présentant des éléments de chauffage (13) par exemple sous la forme de fils de chauffage électriques ou de tubes (8) guidant un fluide de chauffage est disposé comme dispositif de chauffage sur la plaque légère (6).

8. Table de culture selon la revendication 7,
**caractérisée en ce que** les treillis de chauffage (12) présentent les dimensions suivantes :
longueur : 50 à 600, en particulier 100 à 200 cm
largeur : 50 à 600, en particulier 100 à 200 cm
épaisseur : 0,5 à 4,0 en particulier 0,5 à 2 cm.

9. Table de culture selon la revendication 7 et/ou 8,
**caractérisée en ce que** le treillis de chauffage (12) présente un élément de pose de tube (19) de type treillis présentant une nope de pose avec des tubes de chauffage ou tuyaux de chauffage (8) posés dessus ou des fils de chauffage.

10. Table de culture selon l'une quelconque des revendications 1 à 9,
**caractérisée en ce**
**qu'**une chape (9) de préférence liée au ciment, de type chape de béton, par exemple d'une épaisseur de 2 à 40 mm est disposée sur le dispositif de chauffage.

11. Table de culture selon la revendication 10,
**caractérisée en ce que**
respectivement une nervure d'arête (20) se composant notamment d'un matériau thermoisolant est fixée sur des surfaces latérales dirigées vers l'extérieur de la table de culture (1) tout en haut de l'élément de plaque de table (2), une nervure d'arête (20) recouvrant totalement une surface latérale et le côté inférieur de la nervure d'arête (20) étant disposé de manière appropriée à fleur du côté inférieur de la plaque légère (6) et le côté supérieur de la nervure d'arête (20) étant disposé à peu près à fleur de la surface de la couche chape (9).

12. Table de culture selon l'une quelconque des revendications 10 à 11,
**caractérisée en ce que**
une couche de recouvrement (10) étanche à l'eau, d'une épaisseur par exemple de 0,1 à 8 mm, par exemple sous la forme d'un film et/ou d'un plastique est disposée sur la surface de la chape (9).

13. Table de culture selon l'une quelconque des revendications 10 à 12,
**caractérisée en ce que**
une couche de drainage (11) d'une épaisseur par exemple de 0,1 à 20 mm, composée par exemple d'un non-tissé de drainage est disposée sur la chape (9) ou sur la couche de recouvrement (10).

14. Table de culture selon l'une quelconque des revendications 1 à 13,
**caractérisée en ce que**
les tables de culture sont réalisées comme des tables à roulettes, les pieds de table présentant les roulettes (21).
